# EUROPEAN PATENT SPECIFICATION

(11) **EP 0 326 753 B1**
(45) Date of publication and mention of the grant of the patent: **06.04.1994**
(21) Application number: 88311525.5
(22) Date of filing: 06.12.1988
(51) Int. Cl.: C09J 7/04, C09J 4/06

(54) **Removable solid adhesives**
Entfernbare feste Klebstoffe
Adhésifs solides enlevables

(30) Priority: 07.12.1987 JP 310715/87
(43) Date of publication of application: 09.08.1989
(73) Proprietor: FUEKINORI KOGYO KABUSHIKI KAISHA, Yao Osaka (JP)
(72) Inventor: Watanabe, Tetsuya, Osaka (JP)
(74) Representative: Carter, Caroline Ann

(56) References cited:
- DE-A- 1 811 466
- US-A- 3 770 677
- US-A- 4 590 230

## Description

This invention relates to adhesives and more particularly to solid adhesives which can be readhered after being removed from an adherend.

There have been provided removable liquid adhesives which contain organic solvents. For example, such adhesives have been used when printing art-works are made.

On the other hand, solid adhesives of the lip stick type have been described, for example in Japanese Patent publication No. 47-25448 (corresponding to U.S. Specification No. 3 576 776, reissued as Re. 30747), which comprise adhesive substances which are soluble or dispersible in a liquid medium such as water, water-miscible organic solvents or aqueous solution thereof and alkali metal salts or ammonium salts of aliphatic carboxylic acids as a gelatinizer.

Removable liquid adhesives, however, have various drawbacks, such as environmental pollution caused by volatilization of organic solvents which induces health problems, fire risk and so forth.

The solid adhesives mentioned above cannot be readhered repeatedly after being removed from an adherend.

It is therefore an object of the present invention to provide solid adhesives which can be readhered and which are free from sanitary problems, fire risk and so forth.

Our researches for solving the above problems have revealed that the solid adhesives can be modified by additionally employing in the solid adhesives disclosed in the above-mentioned Japanese and U.S. specifications at least one resin selected from the group consisting of polystyrene resins having a melting point of 0°C to 100°C, and rosin resins, polyisobutylene resins and polybutene resins having a softening point of 0°C to 100°C. The disclosures of the above-mentioned Japanese and U.S. specifications are incorporated in this specification by reference.

The present invention provides a solid adhesive comprising an adhesive substance, which substance is soluble or dispersible in a liquid medium such as water, water-miscible organic solvents or aqueous solutions thereof, an alkali metal salt or an ammonium, including lower alkyl ammonium, salt of an aliphatic carboxylic acid having 8 to 36 carbon atoms, and at least one substance selected from polystyrene resins having a melting point of 0°C to 100°C and polyisobutylene resins and polybutene resins having a softening point of 0°C to 100°C.

The present invention further provides the use, to improve the ability of an adhesive to be removed from any adherend and readhered, of at least one substance selected from polystyrene resins having a melting point of 0°C to 100°C and rosin resins, polyisobutylene resins and isobutene resins having a softening point of 0°C to 100°C, the adhesive comprising an adhesive substance, which substance is soluble or dispersible in a liquid medium selected from water, water-miscible organic solvents and aqueous solutions thereof, and an alkali metal or ammonium salt of an aliphatic carboxylic acid having 8 to 36 carbon atoms.

The adhesives of the invention can be provided, for example, in the form of a "lip stick" and used in the same manner as in the previously proposed solid adhesives.

The additional substances used in accordance with the invention i.e. at least one resin selected from the group consisting of polystyrene resins having a melting point of 0°C to 100°C, and rosin resins, polyisobutylene resins and polybutene resins having a softening point of 0°C to 100°C, provide the solid adhesives with removability. Namely, the adhesives do not remain on an adherend when peeled and maintain adhesion properties. Accordingly, a sheet of paper adhered to an adherend with the adhesives can be peeled from the adherend and thereafter can be readhered on an adherend and thus consecutive cyclic usage of adhesion-removal-readhesion can be attained.

In the adhesives of the invention the soluble/dispersible adhesive substance and the carboxylic acid salt may be, for example, any of those specified in any one of the Japanese and U.S. specifications mentioned above, particularly in the Reissue specification. Moreover one or more adjuvants as indicated in any of those specifications can also be employed, and the relative proportions of adhesive substance, salt and, if present, adjuvant(s), may be as indicated in any of those specifications and, in general, any of the formulations disclosed in any of those specifications may be used. Proportions and/or fomulations specified in the claims of the Reissue specification are particularly advantageous. It is, of course, possible to use two or more adhesive substances and/or two or more carboxylic acid salts, if desired.

The present invention also provides an adhesive according to the invention in lip-stick form, and a substrate, preferably a sheet of paper, having a layer of an adhesive according to the invention thereon. The invention further provides an assembly comprising two substrates, at least one of which is preferably a sheet of paper, stuck together by an adhesive according to the invention, the substrates being separable by peeling. The invention also provides an adhesion process in which an adhesive of the invention is used and the use of such an adhesive to stick together two substrates.

The adhesives of the invention being of a solid type, there occur no health problems such as environmental pollution as in the case of the conventional removable liquid adhesives. There is also no fire risk.

The following Examples illustrate the invention.

### Example 1

Into a reactor provided with an agitator, reflux condenser, dropping device and thermometer, 11 parts of myristic acid were poured and 3 parts of 35% aqueous sodium hydroxide were dropped in to prepare a sodium salt of myristic acid. 34 parts of an acrylic emulsion adhesive (NIKASOL TS-971 by Nippon Carbide Kogyo Kabushiki Kaisha) and 14 parts of polystyrene resin (PICCOLASTIK A-5 by HERCULES INCORPORATED) were added while being mixed and stirred well at a temperature of 80 to 90°C. The mixture was then poured into a container such as that used for a lip stick to set up, whereby a removable solid adhesive in accordance with the present invention was obtained.

The adhesive thus obtained was applied to printing paper A of JIS P 3101 and dried. Another printing paper A was adhered to said first paper.

A peel test was then conducted in accordance with JIS Z 0237. The adhesive power for 180° peeling was 80g/25mm which was suitable for removability and readhesion.

### Example 2

A sodium salt of myristic acid was prepared in the same manner as in Example 1. 34 parts of acrylic emulsion adhesive (NIKASOL TS-971 by Nippon Carbide Kogyo Kabushiki Kaisha) and 10 parts of methyl ester of hydrogenated rosin (HERCOLYN D by HERCULES INCORPORATED) were added while being mixed and stirred well at a temperature of 80°C. Then the mixture was poured into a lip stick container to set up whereby a removable solid adhesive in accordance with the present invention was obtained.

The adhesive thus obtained was applied to printing paper A of JIS P 3101 and dried. Another printing paper A was adhered to said first paper.

A peel test was then conducted in accordance with JIS Z 0237. The adhesive power for 180° peeling was 75g/25mm which was suitable for removability and readhesion.

The polystyrene resin employed in Example 1 has a melting point of 0°C to 100°C. The rosin resin employed in Example 2 has a softening point of 0°C to 100°C. Ester gum is also available as a rosin resin.

Alkali metal salts or ammonium, including lower alkyl ammonium, salts of aliphatic carboxylic acids having carbon atoms of 8 to 36 employed in the present invention are preferably sodium salts of aliphatic carboxylic acids having 12 to 18 carbon atoms, for example, sodium salts of lauric acid, myristic acid, palmitic acid, stearic acid or optional mixtures thereof.

### Comparative Example

For comparison purpose, a solid adhesive which contains no resin used in accordance with the present invention was prepared as follows:
In a reactor provided with agitator, reflux condenser, dropping device and thermometer, 11 parts of myristic acid were poured and 3 parts of 35% aqueous sodium hydroxide were dropped to prepare a sodium salt of myristic acid. 34 parts of an acrylic emulsion adhesive (NIKASOL TS-971 by Nippon Carbide Kogyo Kabushiki Kaisha) were added while being mixed and stirred well at a temperature of 80 to 90°C. The mixture was then poured into a lip stick container to set up whereby a solid adhesive was obtained.

The adhesive obtained was applied to printing paper A of JIS 3101 and dried. Another printing paper A was adhered to said first paper. Then a peel test was conducted in accordance with JIS Z 0237. The adhesive power for 180° peeling was Og/25mm, indicating that the solid adhesive had no adhesivity after drying. Thus the solid adhesive containing no resin of the present invention was not suitable for removability and readhesion.

Although a single kind of resin was employed in the above Examples, it is also possible to use mixtures of two or more of the resins used in accordance with the invention.

## Claims

1. A solid adhesive comprising an adhesive substance, which substance is soluble or dispersible in a liquid medium such as water, water-miscible organic solvents or aqueous solutions thereof, and an alkali metal or ammonium salt of an aliphatic carboxylic acid having 8 to 36 carbon atoms, characterised in that the adhesive further comprises at least one substance selected from polystyrene resins having a melting point of 0°C to 100°C and polyisobutylene resins and polybutene resins having a softening point of 0°C to 100°C.

2. A solid adhesive as claimed in claim 1 in which the liquid medium is or contains water.

3. An adhesive as claimed in claim 1 or claim 2, wherein the adhesive substance comprises an acrylic adhesive.

4. An adhesive as claimed in any one of claims 1 to 3, wherein the salt is the sodium salt of an aliphatic carboxylic acid having 12 to 18 carbon atoms.

5. An adhesive as claimed in any one of claims 1 to 4, in lip-stick type form.

6. A substrate, preferably sheet of paper, having a layer of an adhesive as claimed in any one of claims 1 to 4 thereon, the layer preferably having been applied using an adhesive as claimed in claim 5.

7. The use of an adhesive as claimed in any one of claims 1 to 4 to stick together two substrates, at least one of which is preferably a sheet of paper.

8. An assembly comprising two substrates, at least one of which is preferably a sheet of paper, stuck together by an adhesive as claimed in any one of claims 1 to 4.

9. The use, to improve the ability of an adhesive to be removed from an adherend and readhered, of at least one substance selected from polystyrene resins having a melting point of 0°C to 100°C and rosin resins, polyisobutylene resins and isobutene resins having a softening point of 0°C to 100°C, the adhesive comprising an adhesive substance, which substance is soluble or dispersible in a liquid medium selected from water, water-miscible organic solvents and aqueous solutions thereof, and an alkali metal or ammonium salt of an aliphatic carboxylic acid having 8 to 36 carbon atoms.

## Patentansprüche

1. Ein fester Klebstoff, umfassend eine klebende Substanz, die in einem flüssigen Medium, wie Wasser, wassermischbaren organischen Lösungsmitteln oder wässrigen Lösungen derselben, löslich oder dispergierbar ist, und ein Alkalimetall oder Ammoniumsalz einer aliphatischen Karboxylsäure mit 8 bis 36 Kohlenstoffatomen, dadurch gekennzeichnet, daß der Klebstoff ferner zumindest eine Substanz umfaßt, ausgewählt aus Polystyrenharzen mit einem Schmelzpunkt von 0°C bis 100°C und Polyisobutylenharzen und Polybutenharzen mit einem Erweichungspunkt von 0°C bis 100°C.

2. Ein fester Klebstoff nach Anspruch 1, bei dem das flüssige Medium Wasser ist oder enthält.

3. Ein Klebstoff nach Anspruch 1 oder Anspruch 2, bei dem die Klebstoffsubstanz einen Acrylkleber umfaßt.

4. Ein Klebstoff nach einem der Ansprüche 1 bis 3, bei dem das Salz das Natriumsalz einer aliphatischen Karboxylsäure mit 12 bis 18 Kohlenstoffatomen ist.

5. Ein Klebstoff nach einem der Ansprüche 1 bis 4 in Lippenstiftform.

6. Ein Substrat, vorzugsweise Papierblatt, mit einer Schicht eines Klebstoffs, wie in einem der Ansprüche 1 bis 4 beansprucht, welche Schicht vorzugsweise unter Verwendung eines Klebstoffs nach Anspruch 5 aufgebracht worden ist.

7. Die Anwendung eines Klebstoffs nach einem der Ansprüche 1 bis 4 zum Aneinanderheften von zwei Substraten, von denen zumindest eins vorzugsweise ein Papierblatt ist.

8. Eine Zusammenstellung, umfassend zwei Substrate, von denen mindestens eins vorzugsweise ein Papierblatt ist, zusammengeheftet durch einen Klebstoff, wie in einem der Ansprüche 1 bis 4 beansprucht.

9. Die Anwendung von zumindest einer Substanz, ausgewählt aus Polystyrenharzen mit einem Schmelzpunkt von 0°C bis 100°C und Kolophoniumharzen, Polyisobutylenharzen und Isobutenharzen mit einem Erweichungspunkt von 0°C bis 100°C zum Verbessern der Fähigkeit eines Klebstoffs, von einem Träger entfernt und wieder angeklebt zu werden, welcher Klebstoff eine klebende Substanz umfaßt, die in einem flüssigen Medium löslich oder dispergierbar ist, das ausgewählt ist aus Wasser, wassermischbaren organischen Lösungsmitteln und wässrigen Lösungen derselben, und einem Alkalimetall oder Ammoniumsalz einer aliphatischen Karboxylsäure mit 8 bis 36 Kohlenstoffatomen.

## Revendications

1. Adhésif solide comprenant une substance adhésive, laquelle substance est soluble ou dispersable dans un milieu liquide tel que l'eau, des solvants organiques miscibles à l'eau ou leurs solutions aqueuses, et un sel de métal alcalin ou d'ammonium d'un acide carboxylique aliphatique ayant 8 à 36 atomes de carbone, caractérisé en ce que l'adhésif comprend, de plus, au moins une substance choisie parmi les résines de polystyrène ayant un point de fusion de 0°C à 100°C et les résines de polyisobutylène et résines de polybutène ayant un point de ramollissement de 0°C à 100°C.

2. Adhésif solide tel que revendiqué dans la revendication 1, dans lequel le milieu liquide est ou contient de l'eau.

3. Adhésif tel que revendiqué dans la revendication 1 ou la revendication 2, dans lequel la substance adhésive comprend un adhésif acrylique.

4. Adhésif tel que revendiqué dans l'une quelconque des revendications 1 à 3, dans lequel le sel est le sel de sodium d'un acide carboxylique aliphatique ayant 12 à 18 atomes de carbone.

5. Adhésif tel que revendiqué dans l'une quelconque des revendications 1 à 4, sous une forme de bâton de rouge a lèvres.

6. Substrat, de préférence une feuille de papier, portant une couche d'un adhésif tel que revendiqué dans l'une quelconque des revendications 1 à 4, la couche ayant de préférence été appliquée en utilisant un adhésif tel que revendiqué dans la revendication 5.

7. Utilisation d'un adhésif tel que revendiqué dans l'une quelconque des revendications 1 à 4 pour coller ensemble deux substrats dont l'un au moins est de préférence une feuille de papier.

8. Assemblage comprenant deux substrats, dont l'un au moins est de préférence une feuille de papier, collés ensemble par un adhésif tel que revendiqué dans l'une quelconque des revendications 1 à 4.

9. Utilisation, pour améliorer l'aptitude d'un adhésif à être détaché d'une surface d'adhérence et amené à adhérer de nouveau, d'au moins une substance choisie parmi les résines de polystyrène ayant un point de fusion de 0°C à 100°C et les résines de colophane, les résines de polyisobutylène et les résines d'isobutène ayant un point de ramollissement de 0°C à 100°C, l'adhésif comprenant une substance adhésive, laquelle substance est soluble ou dispersable dans un milieu liquide choisi parmi l'eau, les solvants organiques miscibles à l'eau et leurs solutions aqueuses, et un sel de métal alcalin ou d'ammonium d'un acide carboxylique aliphatique ayant 8 à 36 atomes de carbone.
